# EUROPEAN PATENT APPLICATION

(11) **EP 4 712 406 A1**
(43) Date of publication of application: **18.03.2026**
(21) Application number: 24940945.9
(22) Date of filing: 18.12.2024
(51) Int. Cl.: H04L 9/08

(54) **KEY PROTECTION METHOD, CRYPTOGRAPHIC OPERATION METHOD, KEY PROTECTION APPARATUS, CRYPTOGRAPHIC OPERATION APPARATUS, PROCESSOR, CHIP, AND ELECTRONIC DEVICE**

(30) Priority: 21.06.2024 CN 202410814574
(71) Applicant: Hygon Information Technology Co., Ltd., Tianjin 300392 (CN)
(72) Inventor: YING, Zhiwei, Tianjin 300392 (CN); CHEN, Shan, Tianjin 300392 (CN)
(74) Representative: Maiwald GmbH
(86) International application number: PCT/CN2024/140224
(87) International publication number: WO 2025/260658

(57) **Abstract**

Embodiments of the present disclosure disclose a key protection method, a crypto operation method, a key protection apparatus, a crypto operation apparatus, a processor, a chip, and an electronic device. The key protection method is applied to a security processor disposed within a processor and includes: obtaining a key export request which is configured to request for exporting an application key and carries at least authorization information, wherein the security processor stores at least one application key; when the authorization information passes validation, invoking root protection key information and performing protection processing at least on an exported application key to generate a protected application key, wherein the root protection key information is stored in the processor; and exporting the protected application key.

## Description

The present application claims the priority of Chinese Patent Application No. 202410814574.6 filed on June 21, 2024, the disclosure of which is incorporated by reference herein in its entirety as part of the present application.

### TECHNICAL FIELD

Embodiments of the present disclosure relate to a key protection method, a crypto operation method, a key protection apparatus, a crypto operation apparatus, a processor, a chip, and an electronic device.

### BACKGROUND

With the rapid development of the information technology and the network technology, guaranteeing data security has become especially important. A major way of guaranteeing data security is to protect data by encryption with a key, thereby ensuring the confidentiality of data transmission and storage processes.

The key is the basis of a crypto operation (i.e., the key is the basis of encrypting and decrypting data), and it is especially important to guarantee the security of the key. Therefore, how to provide a technical solution to improve the security of a key without compromising the performance of a crypto operation has become an urgent technical problem needing to be solved by those skilled in the art.

### SUMMARY

In view of the above, embodiments of the present disclosure provide a key protection method, a crypto operation method, a key protection apparatus, a crypto operation apparatus, a processor, a chip, and an electronic device, to improve the security of the key without compromising the performance of the crypto operation.

To achieve the above purpose, embodiments of the present disclosure provide following technical solutions.

On the first aspect, the embodiments of the present disclosure provide a key protection method, applied to a security processor disposed within a processor and comprising: obtaining a key export request which is configured to request for exporting an application key and carries at least authorization information, wherein the security processor stores at least one application key; when the authorization information passes validation, invoking root protection key information and performing protection processing at least on an exported application key to generate a protected application key, wherein the root protection key information is stored in the processor; and exporting the protected application key.

On the second aspect, the embodiments of the present disclosure provide crypto operation method, applied to an application processor disposed within a processor and comprising: obtaining a crypto operation instruction that is configured to perform a crypto operation on data to be operated and is at least indicative of the data to be operated and a protected application key, wherein the protected application key is exported based on the key protection method according to the first aspect; performing restoration processing on the protected application key to at least obtain an application key corresponding to the protected application key; and performing a crypto operation on the data to be operated with the application key to obtain a crypto operation result.

On the third aspect, the embodiments of the present disclosure provide a key protection apparatus, applied to a security processor disposed within a processor and comprising: a request obtaining unit configured to obtain a key export request that is configured to request for exporting an application key and carries at least authorization information, wherein the security processor stores at least one application key; a protection unit configured to, when the authorization information passes validation, invoke root protection key information and perform protection processing at least on an exported application key to generate a protected application key, wherein the root protection key information is stored in the processor; and an export unit configured to export the protected application key.

On the fourth aspect, the embodiments of the present disclosure provide a crypto operation apparatus, applied to an application processor disposed within a processor and comprising: an instruction obtaining unit configured to obtain a crypto operation instruction that is configured to perform a crypto operation on data to be operated and is at least indicative of the data to be operated and a protected application key, wherein the protected application key is exported based on the key protection method according to the first aspect; a restoration unit configured to perform restoration processing on the protected application key to obtain at least an application key corresponding to the protected application key; and a crypto operation unit configured to perform a crypto operation on the data to be operated with the application key to obtain a crypto operation result.

On the fifth aspect, the embodiments of the present disclosure provide a processor, comprising a security processor, an application processor, and a root protection key module; wherein the security processor is configured to store at least one application key and perform key management on the application key; the key management performed by the security processor on the application key comprises security protection when the application key is exported; the security processor is configured to perform the security protection when the application key is exported based on the key protection method according to the first aspect; the application processor is configured to execute an instruction invoked by an application program; the instruction invoked by the application program comprises a crypto operation instruction for performing a crypto operation; the application processor is configured to execute the crypto operation instruction based on the crypto operation method according to the second aspect; and the root protection key module is configured to store root protection key information which is used for performing protection processing at least on an application key that the security processor needs to export.

On the sixth aspect, the embodiments of the present disclosure provide a chip, comprising the processor according to the fifth aspect.

On the seventh aspect, the embodiments of the present disclosure electronic device, comprising the chip according to the sixth aspect.

The key protection method provided by the embodiments of the present disclosure can be applied to the security processor disposed within the processor to provide security protection for the application key when the security processor exports it. For example, the security processor can obtain the key export request that is configured to request for exporting the application key and carries at least authorization information, wherein the security processor can store at least one application key. Thus, when the authorization information passes validation, the security processor can invoke the root protection key information (which is stored in the processor) and perform protection processing at least on the exported application key to obtain the protected application key. Accordingly, the security processor can export the protected application key to achieve security protection when the application key needs to be exported from the security processor.

Since the application key is stored in the security processor, and when the application key needs to be exported from the security processor for use in the crypto operation, the exported application key can be subjected to protection processing with the root protection key information. Therefore, the result of exporting the application key is the protected application key, which is not the application key in the form of cleartext. It can be prevented that the application key is leaked when being exported, and the security of the application key is improved. Further, before the application key is exported, the authorization information carried by the key export request is validated. It can be guaranteed that the security processor performs continuous responding processing on the authorized key export request, avoiding leak threat of the unauthorized key export request for the application key. Meanwhile, the security processor is a component within the processor. The security processor is utilized to perform security protection and export processing on the application key. The peripheral access overhead of the application key can be avoided without compromising the performance of the crypto operation. Therefore, the key protection method provided by the embodiments of the present disclosure can improve the security of the key without compromising the performance of the crypto operation.

### BRIEF DESCRIPTION OF DRAWINGS

To describe the technical solutions in the embodiments of the present disclosure or in the prior art more clearly, the accompanying drawings required in the description of the embodiments or the prior art will be described briefly below. Apparently, the drawings described below are merely embodiments of the present disclosure, and accompanying drawings can also be derived from these drawings by those ordinarily skilled in the art without creative efforts.
Fig. 1 is an example diagram of implementing key protection within a processor;
Fig. 2 is an example diagram of a processor provided by an embodiment of the present disclosure;
Fig. 3 is a flowchart of a key protection method provided by an embodiment of the present disclosure;
Fig. 4 is a processing example diagram of key protection provided by an embodiment of the present disclosure;
Fig. 5 is a flowchart of a crypto operation method provided by an embodiment of the present disclosure;
Fig. 6 is a format example diagram of a crypto operation instruction provided by an embodiment of the present disclosure;
Fig. 7 is another flowchart of a crypto operation method provided by an embodiment of the present disclosure;
Fig. 8 is another format example diagram of a crypto operation instruction provided by an embodiment of the present disclosure;
Fig. 9 is a processing example diagram of a crypto operation provided by an embodiment of the present disclosure;
Fig. 10 is an example diagram of a key cache unit provided by an embodiment of the present disclosure;
Fig. 11 is a further another flowchart of a crypto operation method provided by an embodiment of the present disclosure;
Fig. 12 is another processing example diagram of a crypto operation provided by an embodiment of the present disclosure;
Fig. 13 is a block diagram of a key protection apparatus provided by an embodiment of the present disclosure; and
Fig. 14 is a block diagram of a crypto operation apparatus provided by an embodiment of the present disclosure.

### DETAILED DESCRIPTION

The technical solutions of the embodiments will be described in a clearly and fully understandable way in connection with the drawings related to the embodiments of the present disclosure. Apparently, the described embodiments are just a part but not all of the embodiments of the invention. Based on the described embodiments herein, those skilled in the art can obtain other embodiment(s), without any inventive work, which should be within the scope of the invention.

A key is a parameter for encrypting and decrypting data in cryptography (that is to say, a crypto operation is an operation for encrypting or decrypting data using a key). If the key is leaked or stolen illegally, the data encrypted with the key may be cracked illegally, leading to a data security failure. Therefore, a key protection solution needs to be provided to protect the security of the key.

For a computer system (e.g., a computer device) for running a crypto operation, a key protection solution is to store and protect a key in a crypto module externally connected to the computer system, wherein the crypto module is, for example, a physical device such as a crypto card. However, the crypto module is a peripheral for the computer system. As a result, the computer system needs to access the key in the crypto module through the peripheral access each time when running the crypto operation, such that each crypto operation has extra peripheral access overhead, reducing the crypto operation performance. Especially when the data size of the crypto operation is small (e.g., the crypto operation is to encrypt a small data block of several bytes or several hundred bytes), the peripheral access overhead accounts for a large proportion in the overall overhead of the crypto operation, severely affecting the crypto operation performance.

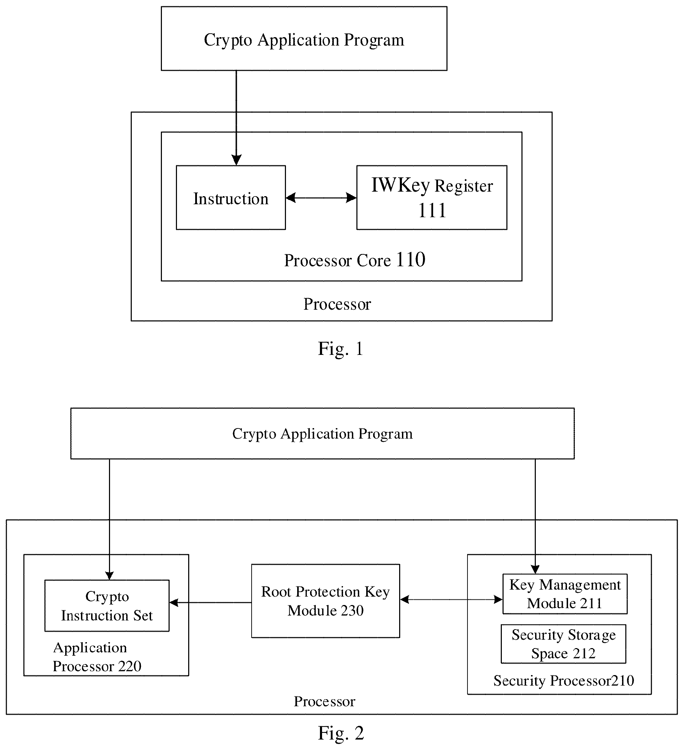

For the computer system for running the crypto operation, another key protection solution is to achieve key protection within the computer system, e.g., achieve key protection within a processor that runs the crypto operation. As an example, Fig. 1 illustrates an example diagram of achieving key protection within a processor. As shown in Fig. 1, the processor, as a computing execution component in the computer system, is mainly configured to explain and execute instructions of computer programs. The processor is, for example, a central processing unit (CPU), a graphics processing unit (GPU), etc. The processor may have one or more processor cores 110. The processor core may be an execution unit within the processor that can independently execute a computing task. The processor core is, for example, a CPU core, a GPU core, etc. In the case of a plurality of processor cores, the plurality of processor cores can simultaneously execute a plurality of processes or threads such that the computing power of the processors is improved through multi-task processing.

The processor runs a crypto application program which may be an application program run by the processor and having a crypto operation requirement. That is to say, the data of the application program needs to be encrypted and decrypted through a crypto operation. A key for performing the crypto operation on the crypto application program may be invoked an application key. In the example of Fig. 1, the processor core in the processor can encrypt the application key for protection and perform the crypto operation on the data of the crypto application program using the encrypted application key.

Specifically, as shown in Fig. 1, an instruction writable key (IWKey) register 111 is disposed within the processor core 110. The IWKey register may be a register that only allows for writing and does not allow for reading, which is configured to store an encryption key for encrypting an application key (that is to say, the encryption key is a key for encrypting the application key). For example, a user can set the IWKey register with a key setting instruction to write an encryption key in the IWKey register. The processor core may then invoke a key encryption instruction to encrypt an application key needing to be protected (which may be input from the outside) with the encryption key written in the IWKey register for protection, thereby generating an encrypted application key. Thus, when the crypto application program run by the processor has a crypto operation requirement, the processor core 110 can perform a crypto operation on the data of the crypto application program using the encrypted application key, realizing security protection against the data of the crypto application program. A type of the crypto operation may be an encryption operation or a decryption operation, depending on the specific crypto operation requirement.

The key protection way illustrated in Fig. 1 can allow for the crypto operation on the data with the encrypted application key. That is, the crypto operation uses the encrypted application key rather than an application key in the form of cleartext. Therefore, the crypto operation does not involve the application key in the form of cleartext so that the security protection against the application key can be realized to a certain extent. However, the key protection way illustrated in Fig. 1 still has the security problem and has limitations, which are manifested in the following aspects:

The encryption key is at the risk of exposure when the IWKey register is set. Specifically, the IWKey register needs to be set by the user, and the encryption key is at the risk of exposure in the process of setting the IWKey register by the user. For example, in the process of setting the IWKey register by the user, the encryption key may be intercepted illegally, and once the encryption key is leaked when the IWKey register is set, the application key encrypted with the encryption key will be decrypted illegally, which severely threatens the data security of the crypto application program.

There is a denial of service (DoS) risk for the write-only characteristic of the IWKey register. Specifically, an illegal program may initiate a DoS attack based on the characteristic of the IWKey register that only allows for writing and does not allow for reading. For example, the illegal program can make the application key encrypted with the encryption key invalid by modifying a value written in the IWKey register (i.e., modifying the encryption key written in the IWKey register). It needs to be noted that the DoS attack is a network security attack pattern, which prevents a valid user from accessing or using a network service or resource by making the network service or resource unavailable.

The use protection for the application key has limitations. Specifically, the key protection way of the IWKey mechanism illustrated in Fig. 1 ensures that the application key in the form of cleartext is not leaked, but does not limit and protect the use of the encrypted application key. Once an attacker obtains the encrypted application key, although the attacker does not know the cleartext form of the application key, the attacker can perform encryption and decryption operations with the encrypted application key. As can be seen, the key protection way illustrated in Fig. 1 is not complete in terms of key protection and does not take key protection at a use level into account.

There is a lack of full key life circle management. Specifically, the key protection way of the IWKey mechanism illustrated in Fig. 1 supports encryption protection on an application key input from the outside, but does not support other management functions such as direct creation of a key. Thus, the key management capability of the key protection way of the IWKey mechanism is weaker than that of a crypto module used as a peripheral. For example, the crypto module used as the peripheral can provide life cycle managements such as generation, storage, application, and destruction of a key.

Based on the defects of the key protection solution described above, the embodiments of the present disclosure provide an improved key protection solution to improve the security of a key without compromising the performance of a crypto operation.

As an optional implementation, Fig. 2 exemplarily illustrates an example diagram of a processor provided by an embodiment of the present disclosure. The processor includes, but is not limited to, any one of a CPU, a GPU, and the like. Exemplarily, the processor mentioned in the embodiments of the present disclosure may be a processor chip. With reference to Fig. 2, the processor may include a security processor (SP) 210, an application processor (AP) 220, and a root protection key module 230.

The security processor 210 may be a component disposed in the processor to perform key management (KM), and is mainly configured to realize key management functions. In an embodiment of the present disclosure, an application key may be stored in the security processor, and the application key is invisible for the outside of the security processor (e.g., the application key is invisible for an external component to the security processor or a user). Thus, it is ensured that the application key would not be exposed to the external environment of the security processor, thus preventing unauthorized access or stealing of the application key. The application key is a key for performing a crypto operation such as encryption and decryption on data of a crypto application program.

In an optional implementation, the security processor may provide a command interface to the outside, thereby allowing an authorized external component to the security processor or an authorized user to interact with the security processor through a predefined secure command so as to realize the key management functions such as generation, importing, exporting, updating, storage, and destruction of an application key. That is to say, the authorized external component to the security processor or the authorized user can interact with the security processor through the predefined secure command by invoking the command interface of the security processor to achieve the life cycle management on the application key.

In an optional implementation, with reference to Fig. 2, the security processor 210 may be provided with a key management module 211 and a security storage space 212. The key management module 211 may be a module component in the security processor to realize the key management functions, such as a logical circuit component in the security processor to realize the key management functions. The security storage space 212 may be a storage space in the security processor to store application keys. For example, the security storage space may be embedded within the security processor and provide physical and logical protection measures to prevent unauthorized access to the application keys stored in the security storage space.

In one implementation example, the key management module is configured to manage and process operations related to the application keys, including, but not limited to, generation, importing, exporting, use, updating, and destruction of an application key. For example, the key management module may manage at least one application key, and the at least one application key is stored in the security storage space. In an optional implementation, the embodiments of the present disclosure support that the key management module manages a plurality of application keys, and the plurality of application keys are stored in the security storage space. Meanwhile, an application program run by the processor cannot directly contact or access an application key, and instead, can access the application key only through the command interface that the key management module provides to the outside. Further, before using the command interface provided by the key management module, the application program needs to pass authorization validation, including, but not limited to, authorization validation such as identity authentication and operation authorization, thus ensuring that only legal and authorized application programs can use the command interface to access application keys. As an example, the embodiments of the present disclosure allows the application program that passes the authorization validation to import commands such as generating, importing, exporting, updating, and destructing an application key (e.g., a key management request) using the command interface provided by the key management module, and the key management module is in charge of processing the commands such as generating, importing, exporting, updating, and destructing an application key to realize the life cycle managements on the application key.

It needs to be noted that the command interface provided by the security processor (which may be specifically the command interface provided by the key management module in the security processor) may be a limited command interface. The limited command interface refers to that the functions and the access authorization of the command interface are limited and defined to meet key security management requirements. For example, the functions of the command interface are necessary functions to realize the key managements and extensive or unnecessary functions are not provided, thereby meeting the security management requirements of application keys. The functions of the command interface include, but are not limited to, generation, importing, exporting, updating, destruction, etc. For another example, the access authorization of the command interface is controlled so that only a user or application program passing identity authentication and being authorized can invoke the command interface to trigger the key managements.

The application processor 220 may be an execution unit of the processor to execute a computing task and can be configured to execute application programs to complete various computing tasks. In one example, the application processor may be a processor core in the processor. In an embodiment of the present disclosure, the application processor can perform crypto operations. For example, the application processor may set a crypto instruction set (CIS). The CIS may be a set of particular instructions designed to support crypto operations (such as an encryption operation and a decryption operation).

In an optional implementation, the CIS may include crypto operation instructions of one or more crypto algorithms, such as an encryption operation instruction of an SM4 algorithm and a decryption operation instruction of the SM4 algorithm. It needs to be noted that the crypto algorithm is an algorithm for implementing the crypto operations (i.e., an algorithm for implementing encryption and decryption of data) and a type of the crypto algorithm may be determined according to actual settings and is not limited to the SM4 algorithm. For example, the embodiments of the present disclosure support any crypto algorithm capable of implementing the crypto operations such as a symmetrical encryption algorithm, an asymmetrical encryption algorithm, and a homomorphic encryption algorithm. Taking the symmetrical encryption algorithm as an example, the embodiments of the present disclosure can use crypto algorithms such as an advanced encryption standard (AES), a triple data encryption standard (3DES), and SM4. Taking the asymmetrical encryption algorithm as an example, the embodiments of the present disclosure can use crypto algorithms such as Rivest Shamir Adleman (RSA) and elliptic curve cryptography (ECC).

In an optional implementation, the application processor can perform, based on input data of a crypto operation instruction, a crypto operation process corresponding to the crypto operation instruction with an application key for performing a crypto operation on the input data, thereby implementing the crypto operation, wherein the crypto operation may be an encryption operation or a decryption operation, depending on a current requirement of the crypto operation.

The root protection key module 230 is a component disposed in the processor to store root protection key (RPK) information. The root protection key information can be used for protecting an application key and can be shared by the security processor and the application processor (i.e., the security processor and the application processor share the root protection key information). In an optional implementation, the root protection key information may include a root encryption key (REK) and a root integrity key (RIK), wherein the root encryption key can be configured for encryption protection of an application key; and the root integrity key can be configured for integrity protection of an encryption result of the root encryption key. Further, the root protection key information may further include related attribute information of the root encryption key and related attribute information of the root integrity key.

It needs to be noted that the root protection key information stored in the root protection key module is internal information of the processor, which can only be internally accessed and used by the processor and is invisible to an external component of the processor. For example, the root protection key information (which may be specifically the root encryption key and the root integrity key) stored in the root protection key module can be accessed by the security processor and the application processor within the processor, but cannot be accessed by an application program run by the processor, thereby ensuring that the root protection key information is not leaked.

In an optional implementation, the root protection key module may be an internal storage space of the processor that can realize information storage. For example, an internal particular address space of the processor may act as the root protection key module for storing the root protection key information. Exemplarily, the root protection key module may be a storage space embedded within the processor (e.g., a storage space such as a register and an RAM within the processor), and an address of the storage space can be configured as a particular address within the processor, e.g., a high address retained within the processor. Thus, the root protection key module may be regarded as an internal particular address space of the processor to store the root protection key information, e.g., a high address space retained within the processor.

It needs to be noted that the high address space is, for example, a space close to an address upper limit of the address space, i.e., a space having a relatively large address value in the address space. A high address range may be set according to an actual situation, which is not limited in the embodiments of the present disclosure. It needs to be further noted that when the processor is manufactured, the high address space within the processor can be retained for special uses (e.g., special uses such as firmware running, system management modes, and secure operations). Thus, by setting the high address space as being accessed by a component within the processor rather than being accessed by an application program run by the processor and an operating system, the root protection key information correspondingly stored in the high address space can be accessed by the security processor and the application processor within the processor and not accessed by the application program run by the processor.

In an optional implementation, the root protection key information may be preloaded within the processor and stored in the root protection key module. For example, in an initialization process of starting the processor, the root protection key information may be set by the security processor and loaded to the root protection key module. Exemplarily, the key management module in the security processor can set, when the processor is started, a value of the root encryption key and a value of the root integrity key, and load them to the root protection key module, e.g., store them in the high address space retained in the processor. In a further optional implementation, the security processor (which may be specifically the key management module of the security processor) can set the value of the root protection key information to be identical each time the processor is started (e.g., each time the processor is started, the set value of the root encryption key keeps the same and the set value of the root integrity key keeps the same) such that the application key protected by the root protection key information is still available after the computer system is restarted.

Based on the processor architecture provided in the embodiments of the present disclosure, a key protection method provided by an embodiment of the present disclosure is described below. The key protection method provided by the embodiments of the present disclosure can support protection processing on an application key. Steps performed by component modules in the content of the key protection method described below may be regarded as corresponding functions of the component modules. Thus, reciprocal reference can be made to the content of the functions of the component modules of the processor illustrated in Fig. 2 and the content of the method described below.

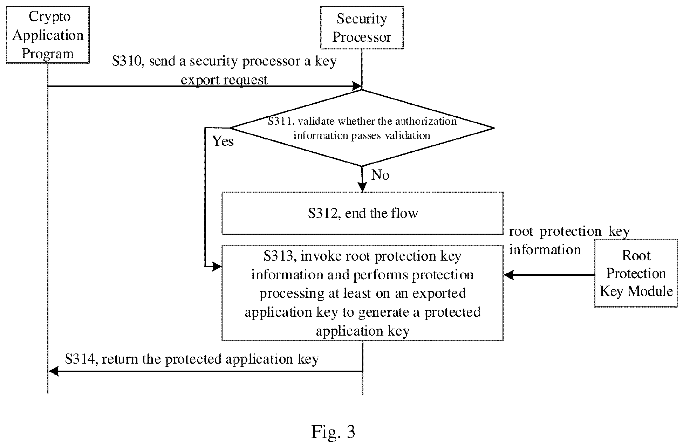

As an optional implementation, Fig. 3 exemplarily illustrates an optional flowchart of a key protection method provided by an embodiment of the present disclosure. Referring to Fig. 3, the key protection method may include the following steps.

In step S310, a crypto application program sends to a security processor a key export request that is configured to request for exporting an application key and carries at least authorization information.

In an optional implementation, based on a command interface provided by the security processor, the crypto application program run by a processor can send the key export request to the security processor through the command interface (e.g., an export interface) provided by the security processor to export an application key when there is an application key export requirement, so as to request the security processor to export the application key. Correspondingly, the security processor can obtain the key export request.

In an optional implementation, based on an authorization validation mechanism of the command interface of the security processor, the crypto application program is required to have a corresponding authorization when requesting for exporting the application key using the export interface. Thus, the key export request can carry at least the authorization information. In an optional implementation, the authorization information may be information for indicating the authorization of the crypto application program, such as a token and a digital certificate provided by the crypto application program.

In an optional implementation, in the case of the security processor storing a plurality of application keys, the crypto application program can specify, when requesting the security processor to export an application key, the application key to be exported. Thus, the crypto application program needs to identify the application key to be exported. For example, the key export request may carry an application key identifier to identify the application key to be exported, wherein the application key identifier is configured to uniquely identify an application key, and different application keys have different identifiers.

In an optional implementation, the application key identifier may be identification information that can refer to an application key, but does not include an actual content of the application key. For example, the application key identifier may be a handle of the application key, wherein the handle may be an abstract reference of the application key to represent the application key, but not include the actual content of the application key. Thus, even though the handle of the application key is maliciously leaked, the security of the application key would not be directly threatened. In a corresponding example, the key export request sent by the crypto application program can carry the application key identifier (e.g., the handle of the application key) and the authorization information.

It needs to be noted that in other possible implementations, the crypto application program may also not specify the application key to be exported. For example, an exported application key can be randomly selected by the security processor, or an exported application key can be selected according to a certain order of a plurality of application keys stored, etc. Thus, the key export request may also not carry the application key identifier (e.g., the handle of the application key).

In an optional implementation, the crypto application program can be specifically run in the application processor within the processor. Thus, step S310 may be performed by the application processor running the crypto application program.

In step S311, the security processor validates whether the authorization information passes validation; if no, step S312 is performed; and if yes, step S313 is performed.

After obtaining the key export request, the security processor can validate the authorization information carried by the key export request to determine whether the crypto application program sending the key export request has the authorization to export the application key. That is to say, if the security processor validates that the authorization information does not pass validation, it indicates that the crypto application program has no authorization to export the application key, and therefore, step S312 can be performed to end the flow. That is, when the crypto application program has no authorization to export the application key, the security processor can direct terminate the flow without responding to the key export request. If the security processor determines that the authorization information passes validation, it indicates that the crypto application program has the authorization to export the application key, and therefore, step S313 can be performed to continue with the subsequent application key export processing flow.

Exemplarily, under a validation mechanism based on a digital certificate, the authorization information provided by the crypto application program may include the digital certificate of the crypto application program. For example, the crypto application program can prove its identity through the digital certificate signed and issued by a trusted certification authority. Thus, the security processor can check the validity of the digital certificate of the crypto application program, e.g., check the signature of the digital certificate, the certification authority, the expiration time of the digital certificate, the revocation list of the digital certificate, etc., to realize the authorization validation based on the digital certificate. Exemplarily, under a validation mechanism based on a token, the authorization information provided by the crypto application program may include the token of the crypto application program. Thus, the security processor can check the validity of the token of the crypto application program, e.g., check the period of validity and the signature of the token, whether the authorization declared in the token corresponds to the exported application key, etc., to realize the authorization validation based on the token. Exemplarily, the embodiments of the present disclosure can also achieve the authorization validation based on an authorization level of the crypto application program. Thus, the authorization information provided by the crypto application program may include authorization level information of the crypto application program so that the security processor can check whether the authorization level of the crypto application program corresponds to an authorization level of the exported application key to realize the authorization validation based on the authorization level of the program. It needs to be noted that in a possible implementation, an administrator of the computer system can define authorization levels of various application programs (e.g., describe, through a program authorization matrix, resources that different types of application programs can be allowed to access). Thus, in the process of defining the authorization levels of various application programs, respective authorization levels can be defined for application programs having the authorization to export application keys. Further, the authorization levels of the application programs can be adjusted dynamically so that the application programs having the authorization to export application keys can change dynamically.

It needs to be noted that the ways and mechanisms to validate the authorization information can be set according to actual situations, which will not be limited in the embodiments of the present disclosure. The embodiments of the present disclosure support use of a single validation mechanism for authorization information, or support combined use of a plurality of validation mechanisms to validate authorization information.

In step S312, the flow is ended.

In step S313, the security processor invokes root protection key information and performs protection processing at least on an exported application key to generate a protected application key.

As an optional implementation, after the authorization information passes validation, the security processor can determine, based on an application key identifier (e.g., a handle of an application key) provided by the crypto application program, the exported application key from a plurality of application keys stored. For example, based on the application key identifier (e.g., the handle of the application key) carried by the key export request, an application key matching the application key identifier (e.g., the handle of the application key) is determined as the exported application key from the plurality of application keys stored in the security processor. It needs to be noted that the embodiments of the present disclosure can also support that the security processor determines the exported application key through random selection or sequential selection, etc., and is not limited to determining the exported application key with the identifier (e.g., the handle). In this case, the crypto application program may not provide the application key identifier (e.g., handle). In other possible implementations, the embodiments of the present disclosure can also support that the security processor stores one application key so that the exported application key can be uniquely determined.

Based on the protection requirement of the exported application key, the embodiments of the present disclosure can allow for security protection at least on the exported application key. The application key can be protected based on the root protection key information stored in the root protection key module. The security processor can invoke the root protection key information stored in the root protection key module and perform protection processing at least on the exported application key to obtain the protected application key (PAK).

In a further optional implementation, when the protection processing is performed on the exported application key, the protection processing can be performed on the authorization information provided by the crypto application program simultaneously. For example, the security processor can invoke the root protection key information stored in the root protection key module and perform protection processing on the exported application key and the authorization information (the authorization information is carried by the key export request) to obtain the protected application key. As a matter of course, simultaneously performing the protection processing on the authorization information is merely an optional way, and the embodiments of the present disclosure can also support that no protection processing is performed on the authorization information.

In an optional implementation in which the application key and the authorization information are protected simultaneously, the security processor can combine the exported application key with the authorization information carried by the key export request to form information to be protected (including the exported application key and the authorization information) and perform the protection processing with the root protection key information, thereby obtaining the protected application key. That is to say, in this implementation, the root protection key information is used for performing integral protection processing on the exported application key and the authorization information, thereby obtaining the protected application key. Correspondingly, the protected application key may be a result of protecting the exported application key and the authorization information as a whole.

In an optional implementation, the protection processing with the root protection key information may be classified as encryption protection and integrity protection, wherein the encryption protection is mainly to ensure the confidentiality of an exported content (the exported content may be the application key and the authorization information, or may be the application key), preventing the exported content from being stolen illegally; and the integrity protection is mainly to ensure the completeness of the exported content, preventing the exported content from being tampered in a transmission process and/or a storage process.

In an optional implementation, the root encryption key in the root protection key information can be configured to perform the encryption protection at least on the exported application key to obtain an encrypted application key (i.e., the encrypted application key is at least an encryption result of the application key). Thus, in an optional implementation, the security processor can invoke the root encryption key and perform encryption processing at least on the exported application key to obtain the encrypted application key. In an optional implementation, an encryption algorithm used by the encryption processing for the encryption protection may be, for example, SM4 symmetrical encryption algorithm, etc.

Further, in the case of simultaneously protecting the exported application key and the authorization information, the root encryption key can be used for performing the encryption protection on the exported application key and the authorization information to obtain the encrypted application key. For example, the security processor can invoke the root encryption key and perform the encryption processing on the exported application key and the authorization information to obtain the encrypted application key. In this case, the encrypted application key may be an overall encryption result of encrypting the exported application key and the authorization information as a whole.

Correspondingly, the encrypted application key may be regarded as a result of encrypting the exported application key using the root encryption key, or a result of encrypting the exported application key and the authorization information using the root encryption key.

Based on the encryption protection, even though the protected application key is illegally intercepted or leaked, the confidentiality of the application key, or of the application key and the authorization information, would be guaranteed due to secure storage of the root encryption key in the root protection key module.

In an optional implementation, the root integrity key in the root protection key information can be configured to perform the integrity protection on the encrypted application key, thereby obtaining integrity protection information. For example, the security processor can invoke the root integrity key and perform integrity protection processing on the encrypted application key to obtain the integrity protection information. As an example, the integrity protection processing can be implemented by generating a message authentication code or digital signature of the encrypted application key.

In an optional implementation, the encrypted application key and the integrity protection information can form the protected application key. For example, the embodiments of the present disclosure can allow for the encryption protection on the exported application key and the authorization information first and then the integrity protection on the result of the encryption protection. Thus, the result of the encryption protection and the result of the integrity protection are combined to obtain the protected application key. Correspondingly, the protected application key may include the encrypted application key and the integrity protection information corresponding to the encrypted application key.

It needs to be noted that in other possible implementations, the embodiments of the present disclosure may also not involve the integrity protection. For example, the security processor can perform the encryption protection at least on the exported application key (or may perform the encryption protection on the authorization information at the same time) so that the result of encryption can be used as the protected application key. Exemplarily, the embodiments of the present disclosure may invoke the root encryption key and perform the encryption processing on the exported application key and the authorization information to obtain the encrypted application key, and use the encrypted application key as the generated protected application key without further integrity protection processing. In this case, the root protection key information may include no root integrity key.

Correspondingly, the embodiments of the present disclosure may obtain the protected application key based at least on the encrypted application key. For example, the encrypted application key is used as the protected application key. For another example, the integrity protection processing is further performed, and the encrypted application key and the integrity protection information corresponding to the encrypted application key are combined to obtain the protected application key.

In step S314, the security processor returns the protected application key to the crypto application program.

After generating the protected application key, the security processor may export the protected application key. For example, the protected application key is returned to a crypto application program in need of the application key (e.g., the crypto application program sending the key export request), so that the application processor can utilize the protected application key to implement a crypto operation on the data of the crypto application program when the crypto application program invokes a crypto operation instruction of the application processor.

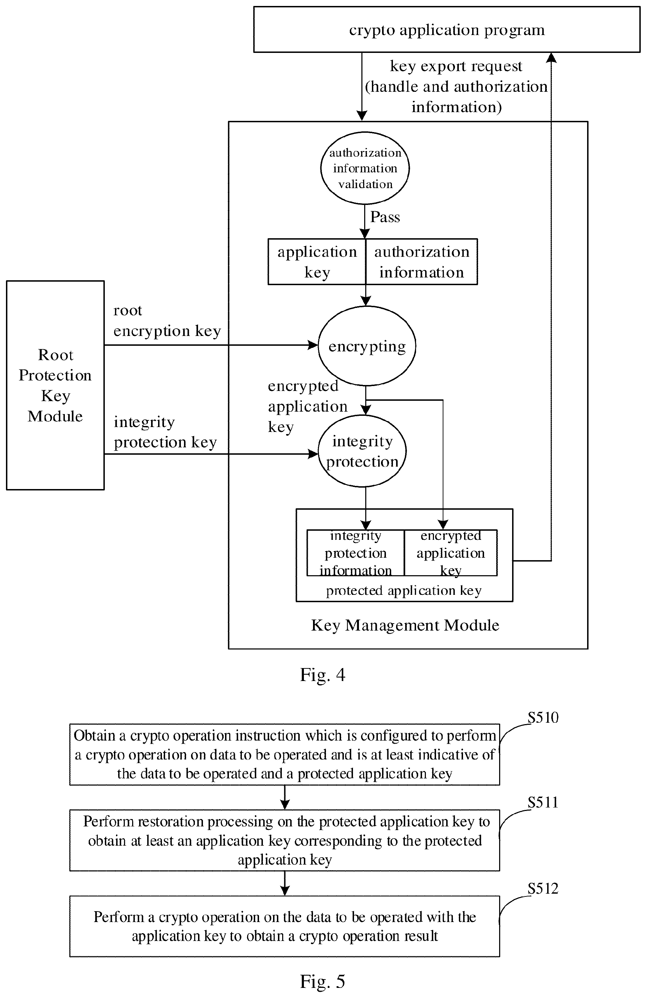

As an example, Fig. 4 exemplarily illustrates a processing example diagram of key protection provided by an embodiment of the present disclosure. As shown in Fig. 4, a crypto application program can send a key export request carrying a handle and authorization information to a key management module. The key management module can determine an exported application key from a plurality of stored application keys with the handle after the authorization information passes validation. Then, the key management module can invoke a root encryption key stored in a root protection key module and encrypt the exported application key and the authorization information to obtain an encrypted application key; and the key management module can invoke an integrity protection key stored in the root protection key module and perform integrity protection processing on the encrypted application key (e.g., compute a message authentication code or digital signature, etc.) to obtain integrity protection information. Thus, the key management module can return a protected application key formed by the encrypted application key and the integrity protection information to the crypto application program.

In a further optional implementation, after the crypto application program obtains the protected application key, the crypto application program can store the protected application key in an internal storage space of a computer system. For example, the protected application key is stored in an internal memory or a register of the computer system so that it can be invoked by the application processor when executing the crypto operation instruction.

In a further optional implementation, after a key management request of an application program run by the processor passes authorization validation, the security processor can process the key management request to support key managements such as generation, importing, updating, and destruction of an application key. For example, the security processor can obtain the key management request (which may be sent by the application program run by the processor) through a command interface. After the key management request passes the authorization validation (e.g., after the application program sending the key management request is validated to have an application key management authorization; for the related content and mechanism of the authorization validation, reference may be similarly made to the above description of the corresponding part), the security processor can process the key management request, wherein the key management request is configured to request for performing any of the following managements on an application key stored in the security processor: generation, importing, updating, and destruction of the application key. As a matter of course, the key managements may further involve exporting of the application key. For the related content of the exporting management of the application key, reference may be made to the above description of the related content of the key protection method.

As can be seen, the security processor can perform the key managements on the application key. The key managements performed by the security processor on the application key may include security protection when exporting the application key. Thus, the security processor can perform the security protection when exporting the application key based on the key protection method provided by the embodiments of the present disclosure. Further, the content about the execution by the security processor in the key protection method provided by the embodiments of the present disclosure can be executed by the key management module in the security processor.

The key protection method provided by the embodiments of the present disclosure can be applied to the security processor (which may be specifically the key management module in the security processor) disposed within the processor to provide security protection for an application key when the security processor exports the application key. For example, the security processor can obtain a key export request of a crypto application program that is configured to request for exporting the application key and carries at least the authorization information, wherein at least one application key can be stored in the security processor (specifically, the application key is stored in the security storage space in the security processor). Thus, when the authorization information passes validation, the security processor can invoke the root protection key information stored in the root protection key module and perform protection processing at least on the exported application key to obtain the protected application key. Accordingly, the security processor can export the protected application key to achieve security protection when the application key needs to be exported from the security processor.

Since the application key is stored in the security processor, and when the application key needs to be exported from the security processor for use in the crypto operation, the exported application key can be subjected to protection processing with the root protection key information. Therefore, the result of exporting the application key is the protected application key, instead of the application key in the form of cleartext. It can be prevented that the application key is leaked when being exported, and the security of the application key is improved. Further, before the application key is exported, the authorization information carried by the key export request is validated. It can be guaranteed that the security processor performs continuous responding processing on the authorized key export request, avoiding leak threat of the unauthorized key export request for the application key. Meanwhile, the security processor is a component within the processor. The security processor is utilized to perform security protection and export processing on the application key. The peripheral access overhead of the application key can be avoided without compromising the performance of the crypto operation. Therefore, the key protection method provided by the embodiments of the present disclosure can improve the security of the key without compromising the performance of the crypto operation.

Further, the root protection key information for protection processing on the exported application key and the authorization information is stored in the root protection key module, and the root protection key module, as an internal storage space of the security processor, is set to be accessed by the security processor and the application processor within the processor and not accessed by an application program run by the processor, ensuring that the root protection key information is not leaked. The security of the key can be further improved.

Based on the processor architecture and the key protection solutions provided by the embodiments of the present disclosure, a crypto operation method provided by an embodiment of the present disclosure is described below. A crypto operation may be regarded as a process of an application processor executing a crypto operation instruction to perform encryption or decryption operation on data of a crypto application program. It needs to be noted that steps performed by component modules in the content of the crypto operation method described below may be regarded as corresponding functions of the component modules. Thus, reciprocal reference can be made to the content of the functions of the component modules of the processor illustrated in Fig. 2 and the content of the method described below.

As an optional implementation, Fig. 5 exemplarily illustrates an optional flowchart of a crypto operation method provided by an embodiment of the present disclosure. The crypto operation method can be performed by an application processor. For example, the application processor can execute an instruction invoked by an application program. The instruction invoked by the application program may include a crypto operation instruction for performing a crypto operation. Thus, the application processor can execute the crypto operation instruction based on the crypto operation method provided by the embodiments of the present disclosure.

With reference to Fig. 5, the crypto operation method may include the following steps.

In step S510, a crypto operation instruction is obtained. The crypto operation instruction is configured to perform a crypto operation on data to be operated and is at least indicative of the data to be operated and a protected application key.

In an optional implementation, when having a crypto operation requirement, a crypto application program run by an application processor can invoke the crypto operation instruction so as to perform the crypto operation such as encryption and decryption on the data to be operated of the crypto application program. For example, the application processor may set a crypto instruction set (CIS). The crypto application program can invoke the crypto operation instruction from the CIS to request for performing the crypto operation on the data to be operated.

In an optional implementation, the crypto operation instruction may indicate at least the data to be operated and the protected application key. The data to be operated may be regarded as data that is to be subjected to the crypto operation (encryption or decryption) by the crypto application program. For example, when the crypto operation performed is the encryption operation, the data to be operated may be cleartext data. When the crypto operation performed is the decryption operation, the data to be operated may be ciphertext data. The protected application key indicated by the crypto operation instruction can be exported based on the key protection method provided by the embodiments of the present disclosure. For example, after the protected application key is exported based on the key protection method provided by the embodiments of the present disclosure, it can be stored in an internal storage space of a computer system. Thus, the crypto operation instruction can indicate the internal storage space where the protected application key is indicated, to realize indicating the protected application key. For example, a storage address of the protected application key in the internal storage space can be used as a source operand of the crypto operation instruction. For the related content of the protected application key, reference may be made to the above description of the corresponding part, which will not be redundantly described here.

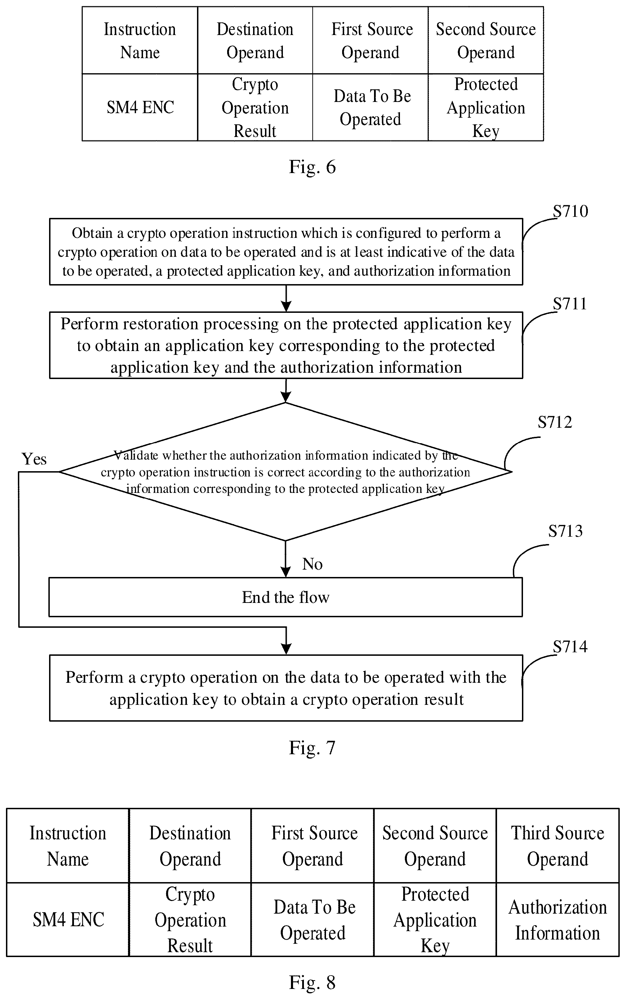

In an optional implementation, the crypto operation instruction can indicate the data to be operated and the protected application key with operands. For example, the data to be operated and the protected application key may be used as operands (which may be specifically source operands) in the crypto operation instruction. Exemplarily, taking a crypto operation instruction of SM4 as an example, Fig. 6 exemplarily illustrates a format example diagram of a crypto operation instruction provided by an embodiment of the present disclosure. As a shown in Fig. 6, a format of the crypto operation instruction may include an instruction name, a destination operand (DST), a first source operand, and a second source operand of the crypto operation instruction.

The instruction name represents the instruction name of the crypto operation instruction, such as instruction names of an SM4 encryption operation instruction (SM4 ENC) and an SM4 decryption operation instruction.

The destination operand corresponds to a crypto operation result of performing the crypto operation on the crypto operation instruction, and the crypto operation result is, for example, an encryption result after encryption or a decryption result after decryption. Optionally, the destination operand can indicate an index address of the crypto operation result. Exemplarily, the crypto operation result can be stored in the storage space of the computer system. Thus, the destination operand can indicate an index address of the storage space where the crypto operation result is stored, e.g., an internal memory address of an internal memory where the crypto operation result is stored or a register index of a register where the crypto operation result is stored.

The first source operand is a source operand (SRC) in the crypto operation instruction and corresponds to the data to be operated. Optionally, the first source operand can indicate an index address of the data to be operated. Exemplarily, the data to be operated can be stored in the storage space of the computer system. Thus, the first source operand can indicate an index address of the storage space where the data to be operated is stored, e.g., an internal memory address of an internal memory where the data to be operated is stored or a register index of a register where the data to be operated is stored. Thus, the application processor can obtain the data to be operated based on the first source operand.

The second source operand is another source operand in the crypto operation instruction and corresponds to the exported protected application key. Exemplarily, after the protected application key is exported from the security processor, it can be stored in the internal storage space of the computer system. Thus, the second source operand can indicate an index address of the protected application key, wherein the index address of the protected application key is configured to index the storage space where the exported protected application key is stored. That is, the second source operand can indicate an index address of the storage space where the exported protected application key is stored, e.g., an internal memory address of an internal memory where the protected application key is stored or a register index of a register where the protected application key is stored. Thus, the application processor can obtain the protected application key based on the second source operand.

In step S511, restoration processing is performed on the protected application key to obtain at least an application key corresponding to the protected application key.

The application processor can obtain the protected application key based on the indication of the crypto operation instruction. Since the protected application key is a result of performing protection processing with root protection key information, in an optional implementation, the application processor can invoke the root protection key information stored in a root protection key module and perform restoration processing on the protected application key, thereby obtaining at least an application key corresponding to the protected application key and available for a crypto operation.

In an optional implementation, the protection processing based on the root protection key information may be classified as encryption protection and integrity protection. Thus, the protected application key may include an encrypted application key and integrity protection information corresponding to the encrypted application key. Accordingly, after obtaining the root protection key information, the application processor can redetermine the integrity protection information of the encrypted application key based on a root integrity key in the root protection key information (e.g., recompute a message authentication code or digital signature of the encrypted application key based on the root integrity key). The redetermined integrity protection information is compared with the integrity protection information in the protected application key. If a comparison result indicates consistency, it is considered that the content of the encrypted application key is not tampered in the transmission process and the storage process, and consistency validation is successful. If the comparison result indicates inconsistency, it is considered that the content of the encrypted application key is illegally tampered in the transmission process and the storage process, and the consistency validation is unsuccessful. In this case, the subsequent flow can be terminated in the embodiments of the present disclosure.

In a further optional implementation, after the encrypted application key passes the consistency validation, the embodiments of the present disclosure can allow for decryption processing on the encrypted application key based on the root encryption key in the root protection key information, thereby obtaining at least the application key corresponding to the protected application key. Further, the result of performing the decryption processing on the encrypted application key might also include authorization information (e.g., authorization information provided by the crypto application program when requesting for exporting an application key). This may correspond to the case where the exported application key and the authorization information are protected simultaneously in key protection.

It needs to be noted that in other possible implementation, if no consistency protection is provided, the protected application key may be the encrypted application key. Thus, the application processor can perform decryption processing on the protected application key based on the root encryption key in the root protection key information to obtain at least the corresponding application key (and possibly also obtain the authorization information).

In step S512, a crypto operation is performed on the data to be operated with the application key to obtain a crypto operation result.

After obtaining the application key, the application processor can perform the crypto operation on the data to be operated with the application key to obtain the crypto operation result. In an optional implementation, the crypto operation result, as the destination operand of the crypto operation instruction, can be stored in the storage space (e.g., the internal memory or the register) corresponding to the index address of the destination operand.

In an optional implementation, the crypto operation may be an encryption operation. Thus, the application processor can perform the encryption operation on the data to be operated (cleartext data) with the application key to obtain an encryption result (ciphertext data corresponding to the data to be operated). Further, if the application processor subsequently needs to perform corresponding decryption operation on the encryption result, the protected application key used by the decryption operation should be consistent with the protected application key used by the encryption operation such that the application keys used by the corresponding encryption operation and decryption operation are consistency, thereby ensuring the correctness of encryption and decryption. For example, the protected application key is used as the second source operand in the crypto operation instruction, and a second source operand in a decryption operation instruction can keep consistent with a second source operand in a corresponding encryption operation instruction. That is, the index addresses of the protected application keys of the corresponding encryption operation instruction and decryption operation instruction keep consistent such that the application keys used by the corresponding encryption operation and decryption operation are consistent.

In an optional implementation, the crypto operation may be a decryption operation. Thus, the application processor can perform the decryption operation on the data to be operated (ciphertext data) with the application key to obtain a decryption result (cleartext data corresponding to the data to be operated). In this case, the protected application key used by the decryption operation is consistent with the protected application key used by the encryption operation on the data to be operated (ciphertext data) obtained through encryption, which can be implemented by keeping the second source operands consistent.

In a further optional implementation, the crypto operation instruction of the embodiments of the present disclosure can also indicate the authorization information of the crypto application program invoking the crypto operation instruction for validating the correctness of the authorization information in the crypto operation process. In this case, performing the restoration processing on the protected application key may also result in obtaining the authorization information (i.e., the authorization information provided by the crypto application program when requesting for exporting the application key) in addition to the application key. Thus, by subjecting the authorization information indicated by the crypto operation instruction to correctness validation with the authorization information in the protected application key, whether the crypto application program currently invoking the crypto operation instruction has the authorization to use the application key can be determined. In an optional implementation, Fig. 7 exemplarily illustrates another optional flowchart of a crypto operation method provided by an embodiment of the present disclosure. The crypto operation method can be performed by the application processor. For corresponding flow parts of Fig. 7 and Fig. 5, reciprocal reference may be made to each other, which will not be described below redundantly. With reference to Fig. 7, the crypto operation method may include the following steps.

In step S710, a crypto operation instruction is obtained. The crypto operation instruction is configured to perform a crypto operation on data to be operated and is at least indicative of the data to be operated, a protected application key, and authorization information.

In an embodiment of the present disclosure, the crypto operation instruction further indicates the authorization information, e.g., the authorization information of the crypto application program currently invoking the crypto operation instruction. In an optional implementation, the crypto operation instruction can be added with a source operand to indicate the authorization information. Optionally, Fig. 8 exemplarily illustrates another format example diagram of a crypto operation instruction provided by an embodiment of the present disclosure. With reference to Fig. 6 and Fig. 8, a format of the crypto operation instruction may further include a third source operand. The third source operand is a further another source operand in the crypto operation instruction and corresponds to the authorization information (AUTH) of the crypto application program currently invoking the crypto operation instruction. Exemplarily, the authorization information can be stored in the storage space of the computer system. Thus, the third source operand can indicate an index address of the authorization information. That is, the third source operand can indicate an index address of the storage space where the authorization information is stored, e.g., an internal memory address of an internal memory where the authorization information is stored or a register index of a register where the authorization information is stored. Thus, the application processor can obtain the authorization information based on the third source operand.

In step S711, restoration processing is performed on the protected application key to obtain an application key corresponding to the protected application key and the authorization information.

In an embodiment of the present disclosure, the restoration processing is performed on the protected application key so that the application key and the authorization information can be obtained simultaneously. Correspondingly, when protection processing is performed on the application key, the protection processing is performed on the application key and the authorization information simultaneously. For the related content, reference may be made to the above description of the corresponding part, which will not be repeated here.

In step S712, whether the authorization information indicated by the crypto operation instruction is correct is validated according to the authorization information corresponding to the protected application key; if no, step S713 is performed; and if yes, step S714 is performed.

The embodiments of the present disclosure can allow for correctness validation on the authorization information indicated by the crypto operation instruction with the authorization information obtained by the restoration processing (i.e., the authorization information corresponding to the protected application key), e.g., comparison of whether the authorization information obtained by the restoration processing is consistent with the authorization information indicated by the crypto operation instruction. If the authorization information is validated to be incorrect (i.e., the authorization information does not pass the correctness validation), it indicates that the crypto application program currently invoking the crypto operation instruction has no authorization to use the application key, and the application processor can thus end the crypto operation flow. If the authorization information is validated to be correct (i.e., the authorization information passes the correctness validation), it indicates that the crypto application program currently invoking the crypto operation instruction has the authorization to use the application key, and the application processor can thus continue with the subsequent crypto operation flow.

In step S713, the flow is ended.

In step S714, a crypto operation is performed on the data to be operated with the application key to obtain a crypto operation result.

For the related content of step S714, reference may be similarly made to step S512 shown in Fig. 5. It needs to be noted that due to Fig. 5 and Fig. 7 show different example flows, the flow steps of the similar contents are denoted by different step reference numerals.

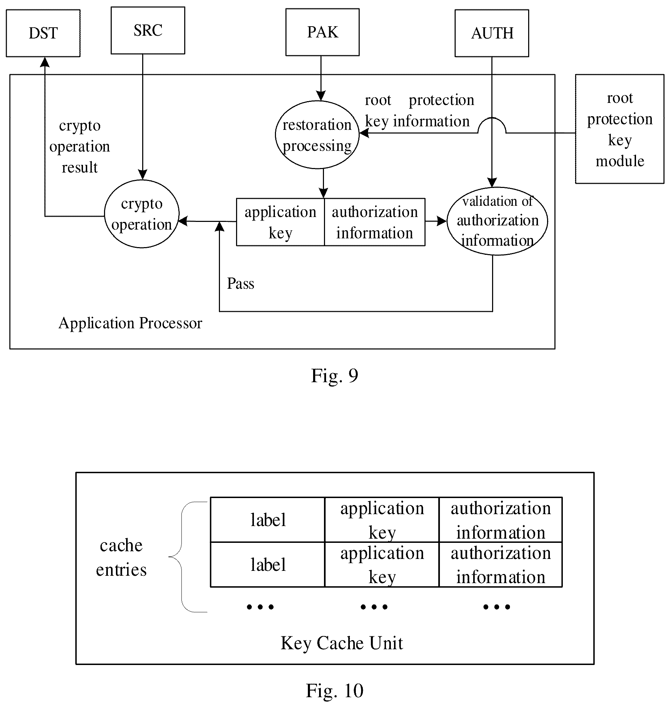

In one implementation example, Fig. 9 exemplarily illustrates a processing example diagram of a crypto operation provided by an embodiment of the present disclosure. As shown in Fig. 9, a crypto operation instruction has operands: SRC (indicating data to be operated), PAK (indicating a protected application key), AUTH (indicating authorization information), and DST (a destination operand). Thus, when executing the crypto operation of the crypto operation instruction, the application processor can perform restoration processing (which may involve an integrity validation process and a decryption processing process) on the protected application key based on root protection key information in a root protection key module to obtain an application key corresponding to the protected application key and the authorization information. Thus, the authorization information obtained by the restoration processing is subjected to correctness validation with the authorization information of the crypto operation instruction. If the correctness validation is successful, the application key obtained by the restoration processing can be used for performing the crypto operation on the data to be operated, and the obtained crypto operation result is stored as the destination operand in a storage space (an internal memory or a register) corresponding to the destination operand.

In a further optional implementation, when the restoration processing is performed on the protected application key, if the root protection key information is used for performing the restoration processing on the protected application key (for the related content, reference may be made to the above description of the corresponding part), at least processes such as invoking and decryption processing of the root protection key information are involved (the integrity validation process may also be involved), which may cause a large operation overhead. The restoration processing of the protected application key is in a critical path of the crypto operation, and if the restoration processing of the protected application key has a large operation overhead, it will undoubtedly result in reduction of the overall processing performance of the crypto operation instruction. On this basis, in the embodiments of the present disclosure, it is considered that a key cache unit is set in the application processor to cache cache information of protected application keys historically used by the application processor. The cache information of the protected application keys may include at least application keys corresponding to the protected application keys to improve the restoration processing efficiency of the protected application keys.

As an optional implementation, Fig. 10 exemplarily illustrates an example diagram of a key cache unit provided by an embodiment of the present disclosure. As shown in Fig. 10, the key cache unit may include a plurality of cache entries; and cache information of one protected application key historically used by the application processor can be cached in one cache entry. For example, at least a label of one protected application key and an application key corresponding to the protected application key can be cached in one cache entry. The label of the protected application key can be information capable of identifying the protected application key to locate, in the plurality of cache entries, the cache entry where the cache information of the protected application key is present. Optionally, the label of the protected application key can be the protected application key itself. For example, the protected application key is directly used as the label of the protected application key. Optionally, the label of the protected application key may also be an identifier computed based on the protected application key, e.g., abstract information of the protected application key.

Further, the embodiments of the present disclosure can also cache authorization information corresponding to the protected application key in addition to the application key corresponding to the protected application key. Correspondingly, the cache information of the protected application key may include the label of the protected application key, the application key corresponding to the protected application key, and the authorization information. For example, with reference to Fig. 10, the label of one protected application key, the application key corresponding to the protected application key, and the authorization information can be cached in one cache entry.

Based on the setting of the cache information of the protected application key, the application processor, when performing the restoration processing on the protected application key, can determine whether the protected application key has cache information first. If yes, the restoration processing can be performed on the protected application key based on the cache information of the protected application key so that at least the corresponding application key can be obtained (the authorization information may also be obtained), thereby avoiding the operation overhead caused by the restoration processing using the root protection key information. If no, the root protection key information needs to be used for performing the restoration processing on the protected application key.

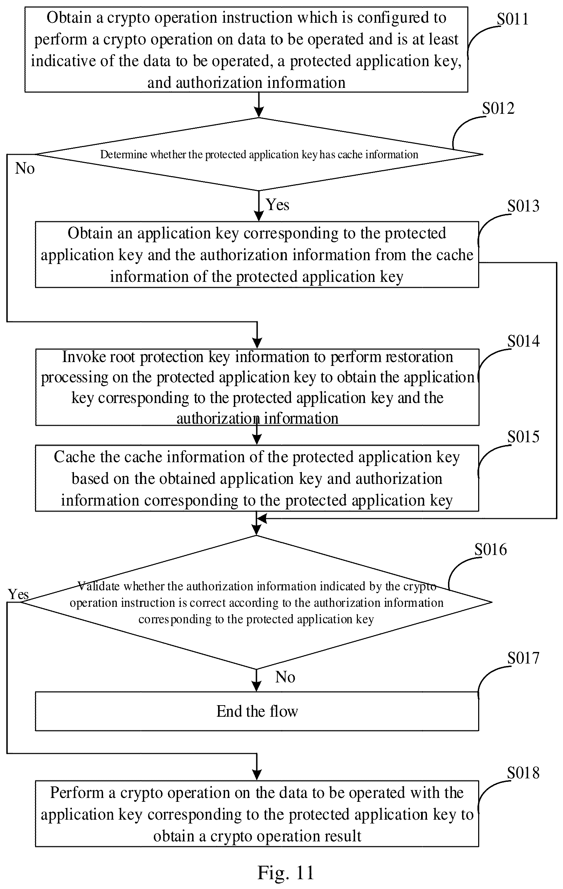

In an optional implementation, Fig. 11 exemplarily illustrates a further another flowchart of a crypto operation method provided by an embodiment of the present disclosure. The crypto operation method can be performed by the application processor. For corresponding flow parts of Fig. 11 and Fig. 7, reciprocal reference may be made to each other, which will not be described below redundantly. With reference to Fig. 11, the crypto operation method may include the following steps.

In step S011, a crypto operation instruction is obtained. The crypto operation instruction is configured to perform a crypto operation on data to be operated and is at least indicative of the data to be operated, a protected application key, and authorization information.

In step S012, whether the protected application key has cache information is determined. If yes, step S013 is performed; and if no, step S014 is performed.

In an optional implementation, the embodiments of the present disclosure can allow for using a label of the protected application key to query whether a cache entry corresponding to the label exists in the application processor (which may be specifically the key cache unit in the application processor). If yes (i.e., the label of the protected application key is hit in the key cache unit), the protected application key has the cache information, indicating that the application processor historically used the protected application key and the cache information of the protected application key has been cached in advance. Thus, the embodiments of the present disclosure can proceed to step S013 to obtain the corresponding application key and authorization information in the cache information of the protected application key. If no (i.e., the label of the protected application key is not hit in the key cache unit), the protected application key has no cache information, indicating that the application processor did not use the protected application key historically. Thus, the embodiments of the present disclosure can proceed to step S014 to perform the restoration processing on the protected application key with the root protection key information.

In step S013, an application key corresponding to the protected application key and the authorization information are obtained from the cache information of the protected application key.

After step S013 is performed, subsequent step S016 can be performed.

In step S014, root protection key information is invoked to perform restoration processing on the protected application key to obtain the application key corresponding to the protected application key and the authorization information.

As can be seen, there may two possible ways of performing the restoration processing on the protected application key, including: performing the restoration processing on the protected application key with the cache information of the protected application key to obtain the corresponding application key and authorization information (involving obtaining the corresponding application key and authorization information from the cache information of the protected application key); and performing the restoration processing on the protected application key by invoking the root protection key information to obtain the corresponding application key and authorization information (involving processes such as invoking the root protection key information, a consistency validation process, and decryption processing).

In step S015, the cache information of the protected application key is cached based on the obtained application key and authorization information corresponding to the protected application key.

After performing step S014, the embodiments of the present disclosure can obtain the application key and authorization information corresponding to the protected application key such that the corresponding cache information of the protected application key is cached in the application processor. For example, the cache entry of the protected application key is updated in the application processor (which may be specifically the key cache unit in the application processor) based at least on the label of the protected application key and the corresponding application key and authorization information, and the updated cache entry is used for caching the label of the protected application key and the corresponding application key and authorization information.

In step S016, whether the authorization information indicated by the crypto operation instruction is correct is validated according to the authorization information corresponding to the protected application key; if no, step S017 is performed; and if yes, step S018 is performed.

In step S017, the flow is ended.

In step S018, a crypto operation is performed on the data to be operated with the application key corresponding to the protected application key to obtain a crypto operation result.

It needs to be noted that due to Fig. 7 and Fig. 11 show different example flows, the flow steps of the similar contents are denoted by different step reference numerals.

It needs to be further noted that the flow shown in Fig. 11 may also not use the authorization information, and a corresponding alternative implementation can be known with reference to the foregoing description, which will not be repeated here.

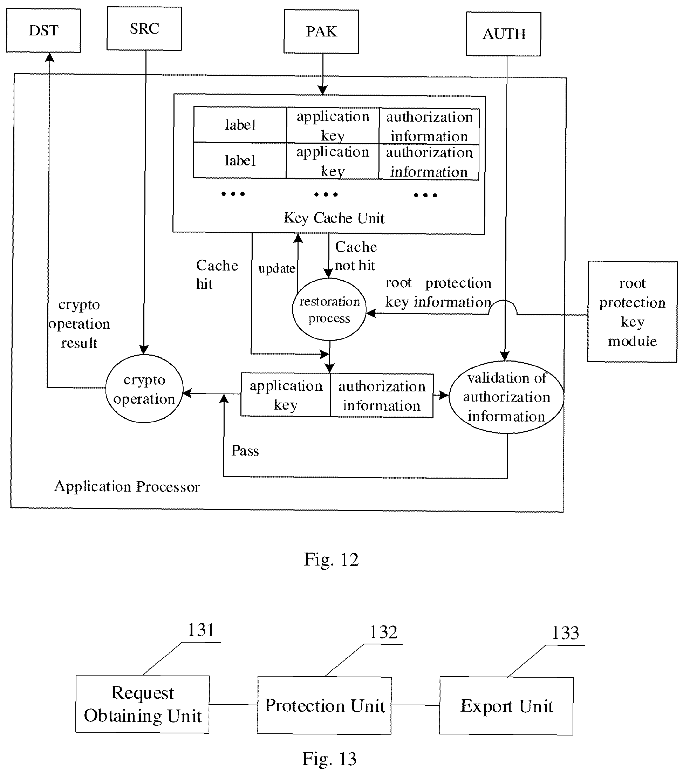

As an implementation example, Fig. 12 exemplarily illustrates another processing example diagram of a crypto operation provided by an embodiment of the present disclosure. With reference to Fig. 9 and Fig. 12, when executing a crypto operation instruction, the application processor can firstly query whether a corresponding cache entry exists in a key cache unit based on a label of a protected application key indicated by the crypto operation instruction; if yes (i.e., the cache entry corresponding to the label of the protected application key exists in the key cache unit), the cache is hit, and corresponding application key and authorization information can be obtained from the queried cache entry; if no (i.e., the cache entry corresponding to the label of the protected application key does not exist in the key cache unit), the cache is not hit, and restoration processing (which may involve a consistency validation process and a decryption processing process) needs to performed on the protected application key with root protection key information in a root protection key module to obtain an application key and authorization information corresponding to the protected application key. In this case, the cache entry corresponding to the protected application key can be further updated in the key cache unit such that the key cache unit has the cache entry in which the label of the protected application key and the corresponding application key and authorization information are cached.

Thus, the authorization information corresponding to the protected application key can be subjected to correctness validation with the authorization information of the crypto operation instruction. If the correctness validation is successful, the application key corresponding to the protected application key can be used for performing a crypto operation on data to be operated, and the obtained crypto operation result is stored as a destination operand in a storage space corresponding to the destination operand.

In a further optional implementation, an embodiment of the present disclosure further provides a key protection apparatus, applied to a security processor disposed within a processor. In an optional implementation, the key protection apparatus can be regarded as an optional functional module unit provided by a key management module within the security processor to implement the key protection method provided by the embodiments of the present disclosure. Reciprocal reference may be made to the content of the module units involved in the content described below and the method content described above.

As an optional implementation, Fig. 13 exemplarily illustrates a block diagram of a key protection apparatus provided by an embodiment of the present disclosure. As shown in Fig. 13, the key protection apparatus may include: a request obtaining unit 131 configured to obtain a key export request that is configured to request for exporting an application key and carries at least authorization information, wherein the security processor stores at least one application key; a protection unit 132 configured to, when the authorization information passes validation, invoke root protection key information and perform protection processing at least on an exported application key to generate a protected application key, wherein the root protection key information is stored in the processor; and an export unit 133 configured to export the protected application key.

In an optional implementation, the root protection key information includes at least a root encryption key. Optionally, the protection unit 132 is configured to invoke the root protection key information and perform the protection processing at least on the exported application key to generate the protected application key, including: invoking the root encryption key and performing encryption processing at least on the exported application key to obtain an encrypted application key; and obtaining the protected application key based at least on the encrypted application key.

In an optional implementation, the root protection key information further includes a root integrity key. Optionally, the protection unit 132 is configured to invoke the root protection key information and perform the protection processing at least on the exported application key to generate the protected application key, further including: after obtaining the encrypted application key, invoking the root integrity key and performing integrity protection processing on the encrypted application key to obtain integrity protection information corresponding to the encrypted application key.

Optionally, the protection unit 132 is configured to obtain the protected application key based at least on the encrypted application key, including: combining the encrypted application key with the integrity protection information corresponding to the encrypted application key to obtain the protected application key.

In an optional implementation, the protection unit 132 is configured to invoke the root encryption key and perform encryption processing at least on the exported application key to obtain the encrypted application key, including: invoking the root encryption key and performing encryption processing on the exported application key and the authorization information to obtain the encrypted application key.

In an optional implementation, the key export request further carries an application key identifier that is identification information referring to an application key, but not including an actual content of the application key. Optionally, before the protection unit 132 performs the step of invoking the root protection key information and performing protection processing at least on the exported application key to generate the protected application key, the key protection apparatus (which may be specifically a key management module) can be further configured to: determine, from a plurality of application keys stored in the security processor, an application key matching the application key identifier as the exported application key.

In an optional implementation, he key protection apparatus (which may be specifically the key management module) can be further configured to: obtain a key management request through a command interface; and after the key management request passes authorization validation, process the key management request, wherein the key management request is configured to request for performing any of the following managements on the application keys stored in the security processor: generation, importing, updating, and destruction of the application keys.

In a further optional implementation, an embodiment of the present disclosure further provides a crypto operation apparatus, applied to an application processor disposed within a processor. In an optional implementation, the crypto operation apparatus can be regarded as an optional functional module unit provided by the application processor to implement the crypto operation method provided by the embodiments of the present disclosure. Reciprocal reference may be made to the content of the module units involved in the content described below and the method content described above.

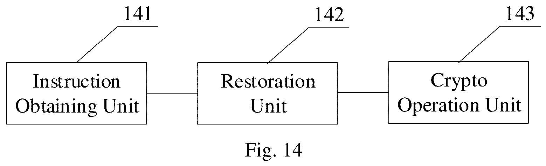

In an optional implementation, Fig. 14 exemplarily illustrates a block diagram of a crypto operation apparatus provided by an embodiment of the present disclosure. As shown in Fig. 14, the crypto operation apparatus may include: an instruction obtaining unit 141 configured to obtain a crypto operation instruction that is configured to perform a crypto operation on data to be operated and is at least indicative of the data to be operated and a protected application key, wherein the protected application key is exported based on the key protection method provided by the embodiments of the present disclosure; a restoration unit 142 configured to perform restoration processing on the protected application key to obtain at least an application key corresponding to the protected application key; and a crypto operation unit 143 configured to perform a crypto operation on the data to be operated with the application key to obtain a crypto operation result.

In an optional implementation, a format of the crypto operation instruction includes an instruction name, a destination operand, a first source operand, and a second source operand of the crypto operation instruction, wherein the destination operand corresponds to the crypto operation result and is indicative of an index address of the crypto operation result; the first source operand corresponds to the data to be operated and is indicative of an index address of the data to be operated; the second source operand corresponds to the protected application key and is indicative of an index address of the protected application key; the index address of the protected application key is configured to index a storage space where the protected application key is stored after being exported, and the storage space is an internal storage space of a computer system.

In an optional implementation, the restoration unit 142 is configured to perform the restoration processing on the protected application key to obtain at least the application key corresponding to the protected application key, including: invoking root protection key information and performing restoration processing on the protected application key to obtain at least the application key corresponding to the protected application key, wherein the root protection key information is stored in the processor.

In an optional implementation, the restoration unit 142 is configured to perform the restoration processing on the protected application key to obtain at least the application key corresponding to the protected application key, including: determining whether the protected application key has cache information, wherein the application processor stores cache information of historically used protected application keys; if yes, obtaining at least the application key corresponding to the protected application key from the cache information of the protected application key; and if no, invoking root protection key information and performing restoration processing on the protected application key to obtain at least the application key corresponding to the protected application key.

In an optional implementation, the restoration unit 142 is configured to determine whether the protected application key has cache information, including: using a label of the protected application key to query whether a cache entry corresponding to the label exists, wherein the application processor stores a plurality of cache entries; cache information of one protected application key historically used by the application processor is cached in one cache entry, and the cache information of the protected application key includes at least a label of the protected application key and a corresponding application key.

In an optional implementation, the restoration unit 142 is configured to obtain at least the application key corresponding to the protected application key from the cache information of the protected application key, including: obtaining at least the application key corresponding to the protected application key from the cache entry corresponding to the label of the protected application key.

In an optional implementation, after the restoration unit 142 performs the step of invoking the root protection key information and performing the restoration processing on the protected application key to obtain at least the application key corresponding to the protected application key, the crypto operation apparatus can be further configured to: update the cache entry of the protected application key based at least on the label of the protected application key and the corresponding application key.

In an optional implementation, the cache information of the protected application key further includes authorization information corresponding to the protected application key. Optionally, the restoration unit 142 is configured to obtain at least the application key corresponding to the protected application key from the cache entry corresponding to the label of the protected application key, including:

obtaining the application key corresponding to the protected application key and the authorization information from the cache entry corresponding to the label of the protected application key.

In an optional implementation, the root protection key information includes at least a root encryption key. Optionally, the restoration unit 142 is configured to invoke the root protection key information and perform the restoration processing on the protected application key to obtain at least the application key corresponding to the protected application key, including: performing decryption processing on the protected application key based on the root encryption key to obtain at least the application key corresponding to the protected application key.

In an optional implementation, the root protection key information further includes a root integrity key; and the protected application key includes an encrypted application key and integrity protection information corresponding to the encrypted application key. Optionally, the restoration unit 142 is configured to invoke the root protection key information and perform the restoration processing on the protected application key to obtain at least the application key corresponding to the protected application key, further including: redetermining integrity protection information of the encrypted application key based on the root integrity key; comparing the redetermined integrity protection information with the integrity protection information in the protected application key; and if a comparison result indicates consistency, performing decryption processing on the protected application key based on the root encryption key to obtain at least the application key corresponding to the protected application key.

The crypto operation instruction further indicates authorization information; and performing the restoration processing by the restoration unit 142 on the protected application key further results in obtaining the authorization information corresponding to the protected application key. Optionally, the crypto operation apparatus can be further configured to: before the crypto operation unit 143 performs the step of performing the crypto operation on the data to be operated with the application key to obtain the crypto operation result, validate whether the authorization information indicated by the crypto operation instruction is correct according to the authorization information corresponding to the protected application key; and if the authorization information indicated by the crypto operation instruction is validated to be correct, perform, by the crypto operation unit 143, the step of performing the crypto operation on the data to be operated with the application key to obtain the crypto operation result.

In an optional implementation, the authorization information indicated by the crypto operation instruction corresponds to a third source operand in a format of the crypto operation instruction; and the third source operand is indicative of an index address of the authorization information indicated by the crypto operation instruction.

In a further optional implementation, an embodiment of the present disclosure further provides a chip, including the processor provided by the embodiments of the present disclosure. Optionally, for related functions of a security processor, an application processor, and a root protection key module disposed within the processor, reference may be made to the above description of the corresponding part.

In a further optional implementation, an embodiment of the present disclosure further provides an electronic device (e.g., a computer device such as a terminal device or a server device), including the chip provided by the embodiments of the present disclosure.

A plurality of embodiment solutions provided by the embodiments of the present disclosure are described above. The optional ways described in the embodiment solutions may be combined with and cross-referenced to one another in a non-conflicting manner so that a plurality of possible embodiment solutions can be derived. These can all be considered as embodiment solutions disclosed by the embodiments of the present disclosure.

Although being disclosed as described above, the present disclosure is not limited thereto. Any person skilled in the art may make changes and modifications without departing from the spirit and scope of the present disclosure. Therefore, the protection scope of the present disclosure should be subject to the scope as defined by the claims.

## Claims

1. A key protection method, applied to a security processor disposed within a processor and comprising:
obtaining a key export request which is configured to request for exporting an application key and carries at least authorization information, wherein the security processor stores at least one application key;
when the authorization information passes validation, invoking root protection key information and performing protection processing at least on an exported application key to generate a protected application key, wherein the root protection key information is stored in the processor; and
exporting the protected application key.

2. The key protection method according to claim 1, wherein the root protection key information at least comprises a root encryption key; and the invoking root protection key information and performing protection processing at least on an exported application key to generate a protected application key comprise:
invoking the root encryption key and performing encryption processing at least on the exported application key to obtain an encrypted application key; and
obtaining the protected application key based at least on the encrypted application key.

3. The key protection method according to claim 2, wherein the root protection key information further comprises a root integrity key; the invoking root protection key information and performing protection processing at least on an exported application key to generate a protected application key further comprise:
after obtaining the encrypted application key, invoking the root integrity key and performing integrity protection processing on the encrypted application key to obtain integrity protection information corresponding to the encrypted application key; and
the obtaining the protected application key based at least on the encrypted application key comprises:
combining the encrypted application key with the integrity protection information corresponding to the encrypted application key to obtain the protected application key.

4. The key protection method according to claim 2 or 3, wherein the invoking the root encryption key and performing encryption processing at least on the exported application key to obtain an encrypted application key comprise:
invoking the root encryption key and performing encryption processing on the exported application key and the authorization information to obtain the encrypted application key.

5. The key protection method according to any one of claims 1 to 4, wherein the key export request further carries an application key identifier that is identification information referring to an application key, but not comprising an actual content of the application key; and
before the invoking root protection key information and performing protection processing at least on an exported application key to generate a protected application key, the key protection method further comprises:
determining, from a plurality of application keys stored in the security processor, an application key matching the application key identifier as the exported application key.

6. The key protection method according to any one of claims 1 to 5, further comprising:
obtaining a key management request through a command interface; and
after the key management request passes authorization validation, processing the key management request, wherein the key management request is configured to request for performing any one of following managements on the application key stored in the security processor: generation, importing, updating, and destruction of the application key.

7. A crypto operation method, applied to an application processor disposed within a processor and comprising:
obtaining a crypto operation instruction that is configured to perform a crypto operation on data to be operated and is at least indicative of the data to be operated and a protected application key, wherein the protected application key is exported based on the key protection method according to any one of claims 1 to 6;
performing restoration processing on the protected application key to at least obtain an application key corresponding to the protected application key; and
performing a crypto operation on the data to be operated with the application key to obtain a crypto operation result.

8. The crypto operation method according to claim 7, wherein a format of the crypto operation instruction comprises an instruction name, a destination operand, a first source operand, and a second source operand of the crypto operation instruction,
wherein the destination operand corresponds to the crypto operation result and is indicative of an index address of the crypto operation result; the first source operand corresponds to the data to be operated and is indicative of an index address of the data to be operated; the second source operand corresponds to the protected application key and is indicative of an index address of the protected application key; the index address of the protected application key is configured to index a storage space where the protected application key is stored after being exported, and the storage space is an internal storage space of a computer system.

9. The crypto operation method according to claim 7 or 8, wherein the performing restoration processing on the protected application key to at least obtain an application key corresponding to the protected application key comprises:
invoking root protection key information and performing restoration processing on the protected application key to at least obtain the application key corresponding to the protected application key, wherein the root protection key information is stored in the processor.

10. The crypto operation method according to claim 7 or 8, wherein the performing restoration processing on the protected application key to at least obtain an application key corresponding to the protected application key comprises:
determining whether the protected application key has cache information, wherein the application processor stores cache information of historically used protected application keys;
if yes, obtaining at least the application key corresponding to the protected application key from the cache information of the protected application key; and
if no, invoking root protection key information and performing restoration processing on the protected application key to at least obtain the application key corresponding to the protected application key.

11. The crypto operation method according to claim 10, wherein the determining whether the protected application key has cache information comprises:
using a label of the protected application key to query whether a cache entry corresponding to the label exists, wherein the application processor stores a plurality of cache entries, and each of the plurality of cache entries is cached with cache information of one protected application key historically used by the application processor, and the cache information of the protected application key at least comprises a label of the protected application key and an application key corresponding to the protected application key; and
the obtaining at least the application key corresponding to the protected application key from the cache information of the protected application key comprises:
obtaining at least the application key corresponding to the protected application key from the cache entry corresponding to the label of the protected application key.

12. The crypto operation method according to claim 11, after the invoking root protection key information and performing restoration processing on the protected application key to at least obtain the application key corresponding to the protected application key, further comprising:
updating the cache entry of the protected application key based at least on the label of the protected application key and the application key corresponding to the protected application key.

13. The crypto operation method according to any one of claims 11 or 12, wherein the cache information of the protected application key further comprises authorization information corresponding to the protected application key; and
the obtaining at least the application key corresponding to the protected application key from the cache entry corresponding to the label of the protected application key comprises:
obtaining the application key corresponding to the protected application key and the authorization information from the cache entry corresponding to the label of the protected application key.

14. The crypto operation method according to any one of claims 9 to 13, wherein the root protection key information at least comprises a root encryption key; and the invoking root protection key information and performing restoration processing on the protected application key to at least obtain the application key corresponding to the protected application key comprise:
performing decryption processing on the protected application key based on the root encryption key to at least obtain the application key corresponding to the protected application key.

15. The crypto operation method according to claim 14, wherein the root protection key information further comprises a root integrity key; the protected application key comprises an encrypted application key and integrity protection information corresponding to the encrypted application key; and
the invoking root protection key information and performing restoration processing on the protected application key to at least obtain the application key corresponding to the protected application key further comprise:
redetermining integrity protection information of the encrypted application key based on the root integrity key;
comparing the redetermined integrity protection information with the integrity protection information in the protected application key; and
if a comparison result indicates consistency, performing decryption processing on the protected application key based on the root encryption key to at least obtain the application key corresponding to the protected application key.

16. The crypto operation method according to any one of claims 7 to 15, wherein the crypto operation instruction further indicates authorization information; the performing restoration processing on the protected application key further results in obtaining the authorization information corresponding to the protected application key; and
the crypto operation method further comprises:
before the performing a crypto operation on the data to be operated with the application key to obtain a crypto operation result, validating whether the authorization information indicated by the crypto operation instruction is correct according to the authorization information corresponding to the protected application key; and
if the authorization information indicated by the crypto operation instruction is validated to be correct, performing the crypto operation on the data to be operated with the application key to obtain the crypto operation result.

17. The crypto operation method according to claim 16, wherein the authorization information indicated by the crypto operation instruction corresponds to a third source operand in a format of the crypto operation instruction; and
the third source operand is indicative of an index address of the authorization information indicated by the crypto operation instruction.

18. A key protection apparatus, applied to a security processor disposed within a processor and comprising:
a request obtaining unit configured to obtain a key export request that is configured to request for exporting an application key and carries at least authorization information, wherein the security processor stores at least one application key;
a protection unit configured to, when the authorization information passes validation, invoke root protection key information and perform protection processing at least on an exported application key to generate a protected application key, wherein the root protection key information is stored in the processor; and
an export unit configured to export the protected application key.

19. A crypto operation apparatus, applied to an application processor disposed within a processor and comprising:
an instruction obtaining unit configured to obtain a crypto operation instruction that is configured to perform a crypto operation on data to be operated and is at least indicative of the data to be operated and a protected application key, wherein the protected application key is exported based on the key protection method according to any one of claims 1 to 6;
a restoration unit configured to perform restoration processing on the protected application key to obtain at least an application key corresponding to the protected application key; and
a crypto operation unit configured to perform a crypto operation on the data to be operated with the application key to obtain a crypto operation result.

20. A processor, comprising a security processor, an application processor, and a root protection key module;
wherein the security processor is configured to store at least one application key and perform key management on the application key; the key management performed by the security processor on the application key comprises security protection when the application key is exported; the security processor is configured to perform the security protection when the application key is exported based on the key protection method according to any one of claims 1 to 6;
the application processor is configured to execute an instruction invoked by an application program; the instruction invoked by the application program comprises a crypto operation instruction for performing a crypto operation; the application processor is configured to execute the crypto operation instruction based on the crypto operation method according to any one of claims 7 to 17; and
the root protection key module is configured to store root protection key information which is used for performing protection processing at least on an application key that the security processor needs to export.

21. The processor according to claim 20, wherein the security processor comprises a security storage space configured to store the application key and a key management module configured to perform the key management on the application key; and
the key management module has a command interface for importing a key management request, and the command interface allows to be used by an application program that passes authorization validation.

22. The processor according to claim 20 or 21, wherein the application processor is provided with a key cache unit that comprises a plurality of cache entries, and each of the plurality of cache entries is cached with cache information of one protected application key historically used by the application processor; and
the cache information of the protected application key comprises a label of the protected application key, an application key, and authorization information corresponding to the protected application key.

23. A chip, comprising the processor according to any one of claims 20 to 22.

24. An electronic device, comprising the chip according to claim 23.
